# EUROPÄISCHE PATENTSCHRIFT

(11) **EP 0 395 622 B1**
(45) Veröffentlichungstag und Bekanntmachung des Hinweises auf die Patenterteilung: **02.06.1993**
(21) Anmeldenummer: 90890086.3
(22) Anmeldetag: 26.03.1990
(51) Int. Cl.: G01L 5/14, G01L 9/00

(54) **Druckaufnehmer**
Pressure sensor
Capteur de pression

(30) Priorität: 30.03.1989 AT 737/89
(43) Veröffentlichungstag der Anmeldung: 31.10.1990
(73) Patentinhaber: AVL Gesellschaft für Verbrennungskraftmaschinen und Messtechnik mbH.Prof.Dr.Dr.h.c. Hans List, 8020 Graz (AT)
(72) Erfinder: Ruckenbauer, Friedrich, Dipl.-Ing., A-8010 Graz (AT); Winkler, Josef, A-8111 Judendorf-Strassengel (AT)
(74) Vertreter: Krause, Walter, Dr. Dipl.-Ing.

(56) Entgegenhaltungen:
- EP-A- 0 090 871
- EP-A- 0 090 872
- EP-A- 0 230 491
- DE-C- 965 272
- DE-C- 1 096 073

## Beschreibung

Die Erfindung betrifft einen Druckaufnehmer, insbesondere zur Messung hoher Drücke, bestehend aus einem in einer Meßbohrung eines Bauteiles befestigten Trägerteil, mit einem damit fest verbundenen Sensorteil mit einem Sensorelement, welches mit einer vom zu messenden Druck beaufschlagbaren Membran zumindest indirekt in Kontakt steht, wobei der Sensorteil eine Dichtbereich zur Abdichtung des Druckaufnehmers gegenüber der Meßbohrung aufweist.

Ein Druckaufnehmer der eingangs genannten Art ist beispielsweise aus der EP-A1 0 230 491, Fig. 1 bekannt und wird hier als Stand der Technik bezeichnet. Der Druckaufnehmer wird in einer Meßbohrung in dem einen Meßraum umgrenzenden Bauteil, beispielsweise einer Hydraulikleitung, einer Einspritzleitung, einer Explosions- oder Brennkammer befestigt, wobei die Meßbohrung einen unteren Bohrungsabschnitt mit kleinerem Durchmesser und einen oberen Bohrungsabschnitt mit größerem Druchmesser aufweist. Am Übergang der Bohrungsabschnitte ist ein Absatz ausgebildet, mit der die Dichtzone bzw. der Dichtbereich eines den Sensorteil umlaufenden Flansches zur Abdichtung des Meßraumes in dichtenden Kontakt tritt. Die Abdichtung der Dichtzone kann durch die Dichtzone selbst oder durch eine zusätzliche Dichtung erzielt werden. Der Absatz sollte dabei genau senkrecht zur Gewindeachse in der Meßbohrung stehen.

Der Bohrungsabschnitt mit größerem Durchmesser weist ein Innengewinde auf, dem ein Außengewinde am Trägerteil des Druckaufnehmers entspricht, um diesen in der Meßbohrung festschrauben zu können.

Der Sensorteil nimmt das eigentliche Sensorelement auf, bei dem es sich vorzugsweise um ein oder mehrere geeignete piezoelektrische Meßelemente handeln kann, deren elektrische Ladungen über eine durch den Trägerteil sich erstreckende Signalleitung nach außen abgeführt werden. Die dem Druck des zu untersuchenden Mediums ausgesetzte untere Stirnseite des Druckaufnehmers umfaßt einen innen verdickten Membranteil, der die durch den Mediumdruck erzeugte Kraft auf das Sensorelement überträgt.

Der Sensorteil liegt an seiner dem Trägerteil zugewandten oberen planen Stirnfläche an einer ebensolchen planen Anlagefläche des Trägerteiles an und ist mit diesem verschweißt. Die durch die plane Stirnfläche des Sensorteils definierte Trennebene erstreckt sich senkrecht im Bezug auf die Mittelachse des Druckaufnehmers.

Zur Erzielung einer ausreichenden Dichtwirkung muß die Dichtfläche des Sensorteils mit hoher Kraft gegen den Absatz der Meßbohrung gepreßt werden. Dazu sind beim Einschrauben des Druckaufnehmers entsprechend hohe Anzugsdrehmomente aufzubringen, die bis zu 60 Nm betragen können. Die sehr hohen daraus resultierenden Dichtkräfte wirken auch auf den Sensorteil, wobei insbesondere zu beachten ist, daß die eingangs gestellte Forderung, daß der Absatz in der Meßbohrung genau senkrecht zur Gewindeachse stehen soll, nicht immer mit ausreichender Genauigkeit erfüllbar ist, woraus eine inhomogene Kraftverteilung entlang des Flansches des Sensorteils resultiert. Dies hat zur Folge, daß das Sensorelement ungleich - und vor allem bei jedem neuerlichen Einbau anders - belastet wird, was Fehlsignale verursacht. Zusätzlich treten beim Einschrauben des Druckaufnehmers große Torsionsspannungen im Sensorbereich auf, die sich ebenfalls ungünstig auf das Meßergebnis auswirken.

Aus der eingangs genannten EP-A1 0 230 491, z.B. Fig. 2, ist dazu ein Druckaufnehmer bekannt geworden, mit welchem diese Probleme gelöst werden sollen. Dazu weist der Trägerteil eine Dichtschulter auf, welche mit dem Absatz in der Meßbohrung in Kontakt tritt und die eigentliche Dichtstelle bildet. Der Trägerteil ist mit einem axial über die Dichtschulter hinausragenden rohrförmigen Ansatz ausgestattet, mit welchem der Sensorteil rohrförmigen Ansatz ausgestattet, mit welchem der Sensorteil verschweißt ist. Die Übertragung von Montage- und Dichtkräften auf den Sensor des Sensorteils wird dadurch verringert. Es ist jedoch auch mit dieser Ausführung nicht möglich, die Einstreuung von Torsionskräften über den den Sensorteil dicht umfassenden und mit diesem verschweißten rohrförmigen Ansatz zu vermeiden, bzw. eine inhomogene Kraftverteilung im Bereich der Dichtschulter auszuschließen.

Aus der DE-PS 10 96 073 ist ein ähnlicher Druckfühler bekannt, dessen Druckfühlergehäuse mit einer Halterungshülse lediglich über einen kurzen, ringförmigen Innenflansch verbunden ist. Die Halterungshülse ist über eine Schraube in der Wand des für Druckmessungen bestimmten Raumes befestigt. Durch diese Maßnahme soll der Kraftfluß in Folge der Einspannung des Druckgehäuses vom Sensorelement ferngehalten werden. Besteht zwischen Gewindeachse des Gewindes, in welches die Schraube eingeschraubt wird und der Achse der Messbohrung, in welche der Druckfühler eingesetzt wird, auch nur eine geringe winkelmäßige Abweichung, kommt es beim Anziehen der Schraube unweigerlich zu einer nicht kontrollierbaren Änderung der auftretenden Kraftlinien und zu einer Beeinflussung des Sensorelementes.

Aufgabe der vorliegenden Erfindung ist es, einen Druckaufnehmer der eingangsgenannten Art so weiterzubilden, daß bei dessen Einbau die Dichtfläche des Sensorteiles mit entlang des Dichtumfanges relativ konstanter Kraft an den Absatz der Meßbohrung gepreßt werden kann, wobei der Einfluß von Torsionskräften auf den Sensorteil bzw. das Sensorelement weitgehend ausgeschaltet weiden soll.

Diese Aufgabe wird erfindungsgemäß dadurch gelöst, daß einander zugeordnete Flächen einer Schulter des Trägerteiles und einer in die Meßbohrung eingeschraubten Halterung als Kegelmantelflächen, deren Erzeugende die Längsachse des Trägerteiles in einem Punkt schneiden oder als Teilflächen einer Kugeloberfläche , deren Mittelpunkt auf der Längsachse des Sensorteils liegt, ausgeführt sind, wobei die einander zugeordneten Flächen den Anpreßdruck von der Halterung auf den Trägerteil übertragen und eine geringe Verkippung der Längsachse des Trägerteiles in Bezug auf die Gewindeachse des Innengewindes der Meßbohrung zulassen.

Dadurch wird ein leichtes Verkippen des Trägerteiles zur Anpassung an die Ebene des Absatzes in der Meßbohrung zugelassen, womit der Anpreßdruck homogen verteilt wird. Da der Trägerteil und der damit verbundene Sensorteil bei ihrem Einbau im Dichtsitz keine Drehbewegung ausführen, können an dieser Stelle auch keine Torsionskräfte entstehen.

Im Sinne der Erfindung ist es natürlich auch möglich, daß nur eine der Flächen kegelförmig bzw. als Teil einer Kugeloberfläche ausgebildet ist, und daß die zugeordnete, nicht gehärtete Fläche erst durch das Anziehen der Spannschraube zur Kegel- oder Kugeloberfläche deformiert wird.

Geringfügige von der einzuschraubenden Halterung über an den Trägerteil abgegebene Torsionskräfte können-von diesem weitgehend kompensiert werden, wenn erfindungsgemäß zwischen den einander zugeordnete Flächen ein hochdruckfester Schmiermittelfilm vorgesehen ist.

Die Halterung kann z.B. als Spannschraube ausgeführt sein, deren zentrale Öffnung ein Fortsatz des Trägerteiles duchsetzt, wobei zwischen Spannschraube und Fortsatz ein sich in Richtung zum Ausgleichselement verjüngender Ringspalt vorgesehen ist. Der konische Ringspalt gibt dabei dem Trägerteil die für die Verkippung notwendige Bewegungsfreiheit innerhalb der Spannschraube.

Erfindungsgemäß kann zwischen den einander zugeordneten Flächen ein plastisch verformbares Ausgleichselement vorgesehen sein, wobei eine Weiterbildung der Erfindung vorsieht, daß eine der mit dem verformbaren Ausgleichselement in Kontakt stehenden Flächen der Halterung oder der Schulter des Trägerteiles halbrunde oder kantige Erhebungen aufweist, welche in das Ausgleichselement eingedrückt sind. Die bleibende Deformation beispielsweise des Dichtringes kann nach dem Ausbau des Druckaufnehmers zur Vermessung der Desaxierung bzw. Verkippung des Druckaufnehmers in der Meßbohrung herangezogen werden.

Es ist in einer vorteilhaften Weiterbildung auch möglich, daß das verformbare Ausgleichselement zumindest an einer seiner mit der Halterung oder der Schulter des Trägerteiles in Kontakt stehenden Flächen halbrunde oder kantige, im wesentlichen radial oder kreisförmig verlaufende Erhebungen aufweist. Diese Ausführungsvariante zeichnet sich vor allem durch ihre kostengünstige Herstellung aus, da die kantigen oder halbrunden Erhebungen am Ausgleichselement ausgebildet sind.

Es hat sich auch als vorteilhaft erwiesen, wenn das verform bare Ausgleichselement einen Z-förmigen oder H-förmigen Quer schnitt aufweist.

Für ein oftmaliges Wiedereinsetzen des Druckaufnehmers kann es schließlich wichtig sein, daß das verformbare Ausgleichselement austauschbar ist und aus einer Kupferlegierung, vorzugsweise aus Messing, oder aus Weicheisen besteht.

Die Erfindung wird im folgenden anhand von Zeichnungen näher erläutert. Es zeigen:
Fig. 1 bis 3 verschiedene Ausführungsvarianten von Druckaufnehmern nach der Erfindung jeweils in einem Längsschnitt,
Fig. 4a und 4b einen Schnitt und eine Draufsicht auf ein Ausgleichselement eines Druckaufnehmers nach Fig. 1 bis 3, sowie
Fig. 5 eine Ausführungsvariante nach Fig. 4a.

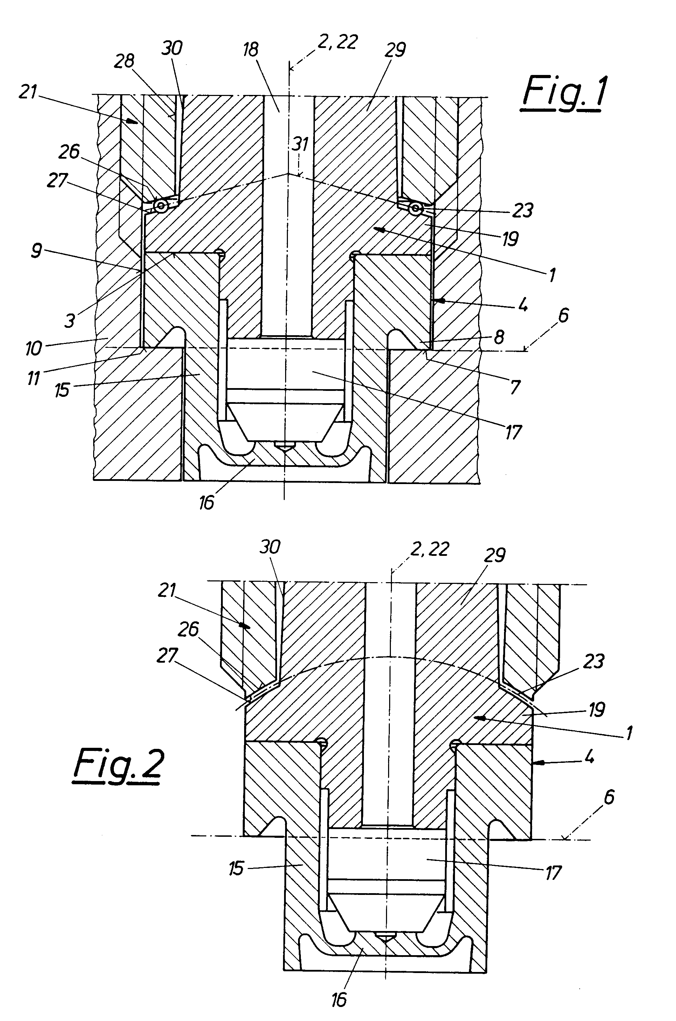

Der in Fig. 1 dargestellte Druckaufnehmer weist einen Trägerteil 1 auf, welche über eine normal zu seiner Längsachse 2 stehenden Fläche 3 mit dem Sensorteil 4 in Kontakt steht und mit diesem verschweißt ist. Der in der Dichtebene 6 ausgebildete Dichtbereich 7 eines umlaufenden Flansches 8 des Sensorteils 4 wird nach dem Einsetzen des Druckaufnehmers in die Meßbohrung 9 eines Bauteiles 10 an einem Absatz 11 angepreßt, welcher den mit einem Innengewinde versehenen Bohrungsabschnitt mit größerem Durchmesser von einem Bohrungsabschnitt mit kleinerem Durchmesser trennt. Der über die Dichtebene 6 hinausragende Membranteil 15 des Sensorteils 4 weist eine im Zentrum verstärkte Membran 16 auf, welche mit dem Sensorelement 17 in Kontakt steht und dieses mit einer gewissen Vorspannung gegen den Trägerteil 1 preßt. Die im Sensorelement 17 nach Druckbeaufschlagung entstehenden Ladungen werden über hier nicht weiter dargestellte elektrische Leitungen, welche in der zentralen Bohrung 18 des Trägerteils 1 verlaufen, abgeleitet.

Der Trägerteil 1 wird vorteilhafterweise nicht direkt in die Meßbohrung 9 eingeschraubt, sondern weist eine Schulter 19 auf, deren Fläche 27 mit einer in die Meßbohrung 9 einschraubbaren, als Spannschraube ausgeführten Halterung 21 zusammenwirkt. Die der Schulter 19 zugeordnete Fläche der Halterung ist mit 26 bezeichnet. Um Abweichungen zwischen der Längsachse 2 des Trägerteiles 1 und der Gewindeachse 22 des Innengewindes der Meßbohrung 9 (welche in der Zeichnung zusammenfallen) auszugleichen und ein geringfügiges Verkippen des Trägerteiles 1 in der Meßbohrung 9 zu ermöglichen, sind die einander zugeordneten Flächen 26 und 27 als Kegelmantelflächen ausgeführt, deren Erzeugende 31 die Längsachse 2 des Trägerteiles 1 schneidet. Weiters kann zwischen der Schulter 19 des Trägerteils 1 und der einschraubbaren Halterung 21 ein verformbares Ausgleichselement 23, z.B. ein deformierbarer Ring, angeordnet sein.

Die zentrale Öffnung 28 der Halterung 21 wird von einem Fortsatz 29 des Trägerteils 1 durchsetzt, wobei zwischen Halterung 21 und Fortsatz 29 ein sich in Richtung zum Ausgleichselement 23 verjüngender Ringspalt 30 vorgesehen ist, durch welchen ein leichtes Verkippen des Trägerteiles 1 und des Sensorteils 4 in der Meßbohrung 9 ermöglicht wird.

In den folgenden Ausführungsvarianten sind gleiche Teile mit gleichen Bezugszeichen versehen.

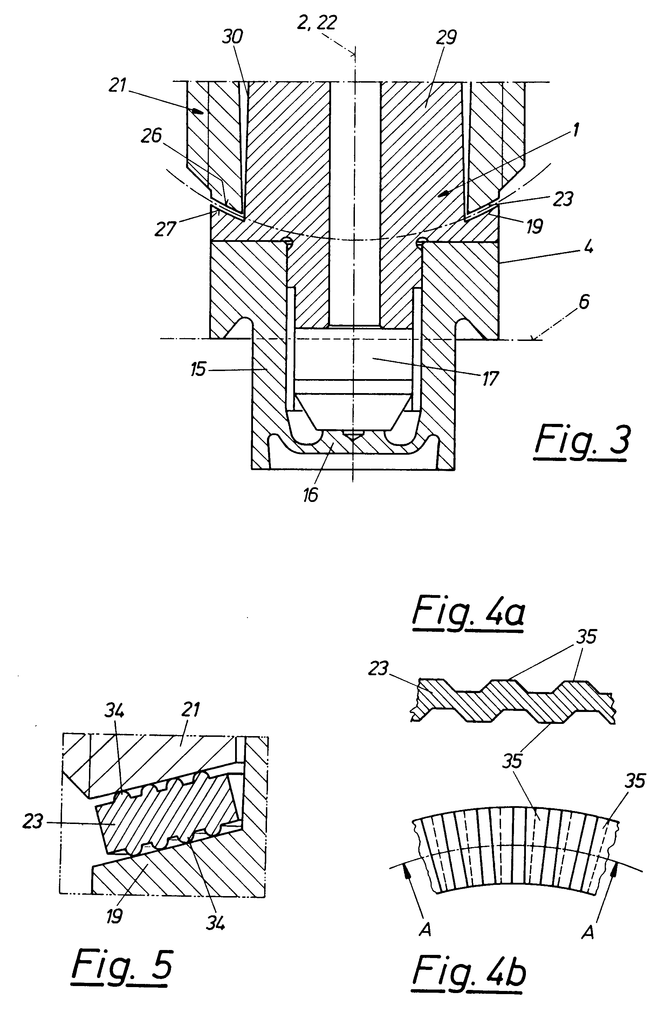

Weiters ist in den Fig. 2 und 3 ein Druckaufnehmer dargestellt, bei welchem sowohl die dem Trägerteil 1 zugeordnete Fläche 26 der Halterung 21 als auch die entsprechende Gegenfläche 27 an der Schulter 19 Teilflächen einer Kugeloberfläche sind, deren Mittelpunkt auf der Längsachse 2 des Sensorteiles 4 liegt. In der Ausführung nach Fig. 2 liegt der Kugelmittelpunkt im Bereich der Dichtebene 6, in jener nach Fig. 3 - bei umgekehrter Krümmungsrichtung - im Bereich des Fortsatzes 29. Das Verkippen wird in beiden Fällen durch einen hochdruckfesten Schmiermittelfilm zwischen den Flächen 26 und 27 erleichtert.

Fig. 4a und 4b zeigen einen Ausschnitt einer Variation eines Ausgleichselementes 23 nach Fig. 1 in zwei Darstellungen, Fig. 4b eine Draufsicht und Fig. 4a einen Schnitt entlang der Linie A-A in Fig. 4b. Hier finden sich zur Verformung kantige, radial verlaufende Erhebungen 35. Es ist natürlich auch möglich, entsprechende Erhebungen 35 auch an der Halterung 21 oder an der Schulter 19 vorzusehen.

Fig. 5 zeigt eine Ausführungsvariante nach Fig. 4a, bei welcher das Ausgleichselement 23 im Querschnitt halbrunde, kreisförmig verlaufende Erhebungen 34 aufweist.

Die Ausgleichselemente aller Ausführungsvarianten sorgen auch dafür, daß Torsionskräfte beim Anziehen der als Spannschraube ausgeführten Halterung nicht oder nur sehr vermindert in den Trägerteil 1 bzw. den Sensorteil 4 eingeleitet werden.

## Patentansprüche

1. Druckaufnehmer, insbesondere zur Messung hoher Drücke, bestehend aus einem in einer Meßbohrung (9) eines Bauteiles (10) befestigten Trägerteil (1), mit einem damit fest verbundenen Sensorteil (4) mit einem Sensorelement (17), welches mit einer vom zu messenden Druck beaufschlagbaren Membran (16) zumindest indirekt in Kontakt steht, wobei der Sensorteil (4) einen Dichtbereich (7) zur Abdichtung des Druckaufnehmers gegenüber der Meßbohrung (9) aufweist, **dadurch gekennzeichnet**, daß einander zugeordnete Flächen (26, 27) einer Schulter (19) des Trägerteiles (1) und einer in die Meßbohrung (9) eingeschraubten Halterung (21) als Kegelmantelflächen, deren Erzeugende (31) die Längsachse (2) des Trägerteiles (1) in einem Punkt schneiden oder als Teilflächen einer Kugeloberfläche, deren Mittelpunkt auf der Längsachse (2) des Sensorteils (4) liegt, ausgeführt sind, wobei die einander zugeordneten Flächen (26, 27) den Anpreßdruck von der Halterung (21) auf den Trägerteil (1) übertragen und eine geringe Verkippung der Längsachse (2) des Trägerteiles (1) in Bezug auf die Gewindeachse (22) des Innengewindes der Meßbohrung (9) zulassen.

2. Druckaufnehmer nach Anspruch 1, **dadurch gekennzeichnet**, daß zwischen den einander zugeordneten Flächen (26, 27) ein hochdruckfester Schmiermittelfilm vorgesehen ist.

3. Druckaufnehmer nach Anspruch 1, **dadurch gekennzeichnet**, daß zwischen den einander zugeordneten Flächen (26, 27) ein plastisch verformbares Ausgleichselement (23) vorgesehen ist.

4. Druckaufnehmer nach Anspruch 3, **dadurch gekennzeichnet**, daß eine der mit dem verformbaren Ausgleichselement (23) in Kontakt stehenden Flächen (26, 27) der Halterung (21) oder der Schulter (19) des Trägerteiles (1) halbrunde oder kantige Erhebungen aufweist, welche in das Ausgleichselement (23) eingedrückt sind.

5. Druckaufnehmer nach Anspruch 3, **dadurch gekennzeichnet**, daß das verformbare Ausgleichselement (23) zumindest an einer seiner mit der Halterung (21) oder der Schulter (19) des Trägerteiles (1) in Kontakt stehenden Flächen halbrunde oder kantige, im wesentlichen radial oder kreisförmig verlaufende Erhebungen (34; 35) aufweist.

6. Druckaufnehmer nach einem der Ansprüche 3 bis 5, **dadurch gekennzeichnet**, daß das verformbare Ausgleichselement (23) austauschbar ist und aus einer Kupferlegierung, vorzugsweise aus Messing, oder aus Weicheisen besteht.

## Claims

1. A pressure sensor, in particular for measuring high pressures, comprising a supporting part (1) held in a measuring bore (9) of a component (10), and an integrated sensor part (4) with a sensing element (17) which is in at least indirect contact with a membrane (16) subject to the pressure to be determined, the sensor part (4) being provided with a sealing area (7) for sealing the pressure sensor against the measuring bore (9), **wherein** the corresponding surfaces (26, 27) of a shoulder (19) of the supporting part (1) and of a fastening element (21) screwed into the measuring bore (9) are configured as lateral surfaces of a cone whose generating lines (31) intersect with the longitudinal axis (2) of the supporting part (1) in one point, or as parts of the surface of a sphere whose centre is situated on the longitudinal axis (2) of the sensor part (4), the said corresponding surfaces (26, 27) transmitting the pressure from the fastening element (21) onto the supporting part (1), and permitting a slight tilt of the longitudinal axis (2) of the supporting part (1) relative to the axis (22) of the internal thread of the measuring bore (9).

2. A pressure sensor as in claim 1, **wherein** an extreme pressure lubricant film is provided between the corresponding surfaces (26, 27).

3. A pressure sensor as in claim 1, **wherein** a permanently deformable compensating element (23) is provided between the corresponding surfaces (26, 27).

4. A pressure sensor as in claim 3, **wherein** one of the surfaces (26, 27) of the fastening element (21) or the shoulder (19) of the supporting part (1) that are in contact with the deformable compensating element (23), have ridges with a semi-circular or trapezoidal profile, which are pressed into the compensating element (23).

5. A pressure sensor as in claim 3, **wherein** at least one of the surfaces of the deformable compensating element (23) that are in contact with the fastening element (21) or the shoulder (19) of the supporting part (1), has ridges (34; 35) with a semi-circular or trapezoidal profile, which extend either radially or circularly.

6. A pressure sensor as in any of claims 3 to 5, **wherein** the deformable compensating element (23) is replaceable and is made of copper alloy, preferably brass, or of soft steel.

## Revendications

1. Capteur de pression, notamment pour mesurer des pressions élevées composé d'une pièce support (1) fixée dans un trou de mesure (9) d'une pièce constitutive (10) avec une pièce de capteur (4) qui lui est fixée solidairement ayant un élément capteur (17) qui est en contact au moins indirect avec une membrane (16) pouvant être soumise à la pression à mesurer, la pièce de capteur (4) présentant un domaine d'étanchéité (7) pour rendre étanche le capteur de pression vis-à-vis du trou de mesure (9), caractérisé en ce que les surfaces correspondantes (26, 27) d'un épaulement (19) de la pièce support (1) et d'un support vissé (21) dans le trou de mesure (9) sont réalisées en tant que surfaces coniques, dont la génératrice (31) coupe l'axe longitudinal (2) de la pièce support (1) en un point ou en tant que surfaces partielles d'une surface de sphère, dont le centre est sur l'axe longitudinal (2) de la pièce de capteur (4), les surfaces correspondantes (26, 27) supportent la pression d'application du support (21) sur la pièce support (1) et permettent un faible basculement de l'axe longitudinal (2) de la pièce support (1) par rapport à l'axe de filetage (22) du filetage interne du trou de mesure (9).

2. Capteur de pression selon la revendication 1, caractérisé en ce qu'entre les surfaces correspondantes (26, 27), on prévoit un film lubrifiant résistant à haute pression.

3. Capteur de pression selon la revendication 1, caractérisé en ce qu'entre les surfaces correspondantes (26, 27), on prévoit un élément de compensation (23) plastiquement déformable.

4. Capteur de pression selon la revendication 3, caractérisé en ce qu'une des surfaces (26, 27) du support (21) ou de l'épaulement (19) de la pièce support (1) qui est en contact avec l'élément de compensation déformable (23), présente des surélévations demi-rondes ou à bords vifs qui pénètrent dans l'élément de compensation (23).

5. Capteur de pression selon la revendication 3, caractérisé en ce que l'élément de compensation déformable (23) présente au moins sur une de ses faces en contact avec le support (21) ou l'épaulement (19) de la pièce support (1) des surélévations (34, 35) demi-rondes ou à bords vifs s'étendant essentiellement radialement ou circulairement.

6. Capteur de pression selon l'une des revendications 3 à 5, caractérisé en ce que l'élément de compensation déformable (23) est échangeable et est en alliage de cuivre, de préférence en laiton ou en fer doux.
